# FASCICULE DE BREVET EUROPEEN

(11) **EP 1 051 603 B1**
(45) Date de publication et mention de la délivrance du brevet: **22.09.2004**
(21) Numéro de dépôt: 99901556.3
(22) Date de dépôt: 19.01.1999
(51) Int. Cl.: G01N 1/00, G01N 30/18

(54) **DISPOSITIF POUR LA QUALIFICATION DE PRODUITS CONTENANT DES SUBSTANCES VOLATILES**
VORRICHTUNG ZUR QUALIFIKATION VON PRODUKTEN MIT LEICHTFLÜCHTIGEN BESTANDTEILEN
DEVICE FOR QUALIFYING PRODUCTS CONTAINING VOLATILE SUBSTANCES

(30) Priorité: 29.01.1998 FR 9801191
(43) Date de publication de la demande: 15.11.2000
(73) Titulaire: Zesiger, Thierry, 2068 Hauterive (CH)
(72) Inventeur: Zesiger, Thierry, 2068 Hauterive (CH)
(74) Mandataire: Besse, François
(86) Numéro de dépôt international: PCT/CH1999/000024
(87) Numéro de publication internationale: WO 1999/039175

(56) Documents cités:
- EP-A- 0 451 566
- EP-A- 0 770 869
- WO-A-95/25268
- WO-A-96/01994
- US-A- 3 940 995
- PATENT ABSTRACTS OF JAPAN vol. 096, no. 012, 26 décembre 1996 & JP 08 201249 A (NOHMI BOSAI LTD), 9 août 1996 cité dans la demande

## Description

La présente invention concerne un dispositif pour la qualification de produits contenant des substances volatiles formant un analyte, qui comprend un appareil de mesure doté d'une enceinte de mesure et d'un circuit électronique d'analyse pour définir des caractéristiques de l'analyte, un système de pompage pour faire le vide à l'intérieur de l'enceinte, une chambre d'échantillonnage dans laquelle l'analyte est introduit et un capillaire pour relier la chambre à l'enceinte.

Un tel dispositif est plus particulièrement utilisé pour identifier des particules odorantes. C'est pourquoi il est parfois appelé "nez artificiel". Il trouve des applications dans l'agro-alimentaire ou la parfumerie par exemple et permet de s'assurer, par l'analyse des molécules odorantes, que la qualité des produits fabriqués reste dans les limites du standard requis. Il sert notamment à mettre en évidence une modification des caractéristiques de certains composants de base ou une évolution de l'une ou l'autre des étapes d'un processus de fabrication.

A cet effet, on prélève, de manière programmée, une quantité définie de produit à contrôler, que l'on enferme dans un récipient de dimensions données, constantes pour une série de mesures. Le récipient est choisi de façon à laisser subsister un espace non rempli qui, après un temps d'équilibrage, contient l'analyte, formé de substances volatiles représentatives du produit.

Dans les dispositifs actuellement utilisés pour de telles opérations, on caractérise souvent l'analyte à l'aide d'un chromatographe en phase gazeuse. Cela se fait en introduisant l'analyte dans une chambre reliée à un système de détection au moyen d'une colonne garnie d'un matériau particulier. Le choix de ce dernier et les conditions opératoires permettent d'engendrer des vitesses de migration différentes pour chacune des substances formant l'analyte. Un gaz vecteur, en légère surpression, assure l'entraînement de ces substances.

Le temps d'arrivée au détecteur varie donc en fonction des caractéristiques des molécules formant l'analyte. Il est ainsi possible de connaître la qualité d'un produit sur la base de la séquence et de la densité des molécules arrivant au détecteur. L'information ainsi recueillie ne permet toutefois pas d'identifier ces substances. On se contente en général de suivre l'évolution de l'empreinte laissée par l'analyte après un cycle de mesure.

Pour identifier les substances, un spectromètre de masse ou un spectromètre infrarouge a été ajouté à la sortie de la colonne. Il est ainsi possible d'avoir des informations complémentaires concernant la composition chimique de l'analyte.

Le spectromètre de masse utilisé est généralement choisi de manière à pouvoir analyser tout le spectre des ions provenant de la dissociation des molécules de l'analyte, lesquelles peuvent avoir une masse molaire de 400 et plus. De tels spectromètres sont coûteux, délicats et sensibles à l'oxygène dans leur partie assurant la mesure, les rendant mal adaptés à la mesure d'analytes habituellement riches en air.

Le brevet japonais 8'201'249 décrit un dispositif fonctionnant sans chromatographe. Il comporte une chambre dans laquelle est placé un échantillon. Cette chambre est reliée au moyen d'un capillaire à un spectromètre de masse comportant une enceinte de mesure. La chambre, le capillaire et l'enceinte sont chauffés, d'une part pour favoriser le dégagement des odeurs, d'autre part pour éviter leur adsorption sur les parois.

L'utilisation des dispositifs décrits ci-dessus nécessite toutefois de nombreuses précautions, notamment pour s'assurer que le produit antérieurement mesuré ne subsiste pas à l'intérieur de la chambre, de l'enceinte ou de la colonne, par exemple adsorbé sur les parois, ce qui pourrait fausser la mesure suivante. Il est donc indispensable d'effectuer des opérations lourdes et coûteuses pour assurer la propreté de ces dispositifs.

La présente invention a pour but principal de pallier cet inconvénient et plus particulièrement de permettre la réalisation d'un dispositif tel que défini ci-dessus, d'un usage facile et automatisable.

A cet effet, l'invention a pour objet un dispositif pour qualifier des produits contenant des substances volatiles qui forment ensemble un analyte, ledit dispositif comportant un appareil de mesure doté d'une enceinte de mesure et d'un circuit électronique d'analyse pour définir des caractéristiques de l'analyte, un système de pompage pour faire le vide à l'intérieur de ladite enceinte, une chambre d'échantillonnage dans laquelle l'analyte est introduit et un capillaire pour relier ladite chambre à ladite enceinte, la chambre d'échantillonnage de ce dispositif comprenant :
- une première entrée pour introduire ledit analyte et munie d'un opercule étanche,
- une deuxième entrée reliée à une source de gaz de purge et munie d'une vanne, et
- une sortie permettant l'évacuation du gaz contenu dans ladite chambre et munie également d'une vanne.

Le dispositif comprend en outre un système de transfert pour introduire l'analyte dans la chambre d'échantillonnage et un programmateur de commande du circuit d'analyse, du système de transfert et des vannes, permettant de réaliser de manière séquentielle la purge de la chambre, du capillaire et de l'enceinte, puis l'introduction de l'analyte dans l'enceinte et, enfin, son analyse.

Selon un premier mode de réalisation de l'invention, le dispositif est caractérisé par le fait que le programmateur est agencé de manière à ce que :
- dans un premier temps, les vannes de la deuxième entrée et de la sortie sont ouvertes pour laisser passer le gaz de purge tant qu'un nombre significatif de particules de l'analyte antérieurement analysé pourrait se trouver dans la chambre, l'enceinte ou le capillaire,
- dans un deuxième temps, la vanne d'entrée est fermée, empêchant la pénétration de gaz de purge,
- dans un troisième temps, le système de transfert est activé, pour introduire dans la chambre l'analyte à mesurer,
- dans un quatrième temps, la vanne de sortie est fermée,
- dans un cinquième temps, au moins, l'appareil d'analyse définit les caractéristiques de l'analyte qui passe de ladite chambre dans ladite enceinte,
- dans un sixième temps, l'opération recommence au premier temps, et cela tant qu'il y a d'autres produits à qualifier.

D'autres caractéristiques et avantages de l'invention apparaîtront à la lecture de la description détaillée suivante d'un exemple de réalisation donné à titre illustratif et non limitatif en liaison avec les dessins annexés dans lesquels:
- la figure 1 représente une vue d'ensemble d'un dispositif selon l'invention;
- la figure 2 est un schéma de principe montrant de manière plus détaillée une partie du dispositif de la figure 1;
- la figure 3 montre le principe logique de fonctionnement d'un mode préférentiel de commande du dispositif selon l'invention ; et
- la figure 4 illustre une variante du mode de réalisation représenté à la figure 2.

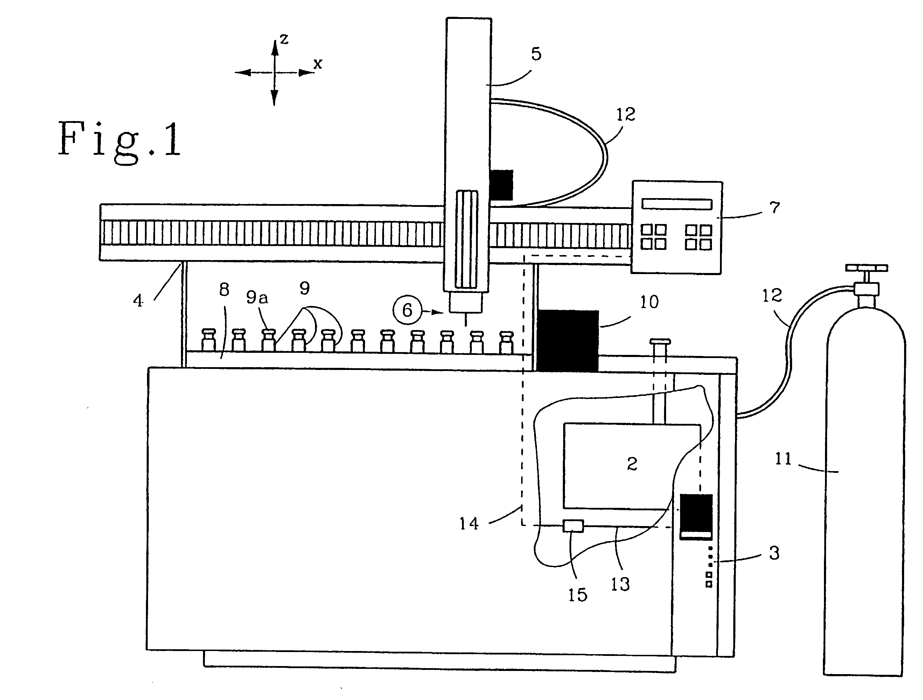

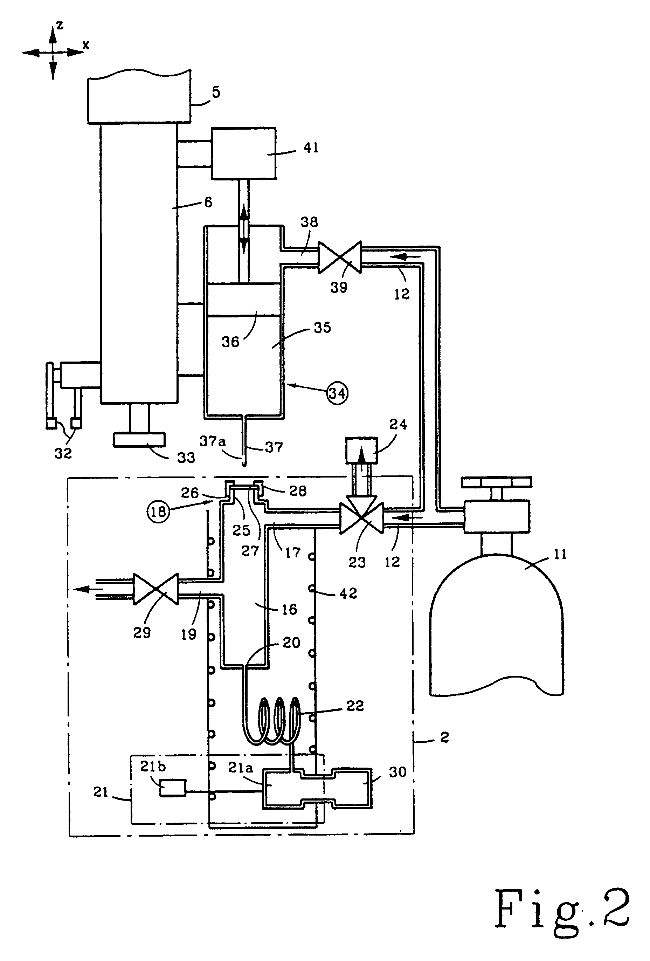

Si l'on se réfère à la figure 1, on constate que le dispositif selon l'invention comporte un bâti-support 1 parallélépipédique, à l'intérieur duquel est logé un appareil de mesure 2, qui sera décrit de manière plus détaillée en référence à la figure 2. Un tableau de commande 3 occupe une part de l'une des faces latérales du bâti-support 1.

La face supérieure du bâti-support 1 porte un rail 4, sur lequel coulisse un bras 5 mobile selon un axe X, horizontal, et un axe Z, vertical. Il porte une tête de manipulation 6. Une boîte de commande 7 occupe l'une des extrémités du rail 4.

La face supérieure du bâti-support 1 porte en outre une table 8, sur laquelle reposent des récipients 9, ainsi qu'un four 10, contigu à la table 8.

Les récipients 9 peuvent être de différents types, en fonction du produit à analyser. Toutefois, dans la description qui va suivre, il sera considéré qu'il s'agit de flacons, fermés au moyen d'un opercule étanche. Ce dernier est formé d'un septum et d'une bague 9a fixant le septum au flacon. La bague 9a est avantageusement en matériau magnétique.

Une source de gaz de purge 11 alimente l'appareil d'analyse 2 et la tête 6, au moyen d'un tuyau 12.

Le tableau de commande 3 et la boîte de commande 7 sont respectivement reliés au moyen de câbles 13 et 14 à un programmateur schématiquement représenté en 15. Le programmateur 15 est avantageusement réalisé au moyen d'un ordinateur qui assure la commande des différents composants du dispositif selon l'invention, la mesure et le calcul des paramètres de contrôle et de qualification. Dans un but de simplification des dessins, les liaisons entre le programmateur et les composants qu'il commande n'ont pas été représentées.

La figure 2 permet de préciser la manière dont l'appareil de mesure 2 et la tête 6 sont conçus.

L'appareil de mesure 2, dont les différentes parties sont entourées par un trait mixte, est commandé par le programmateur 15. Il comporte une chambre d'échantillonnage 16 avec deux entrées 17 et 18 et deux sorties 19 et 20. La chambre d'échantillonnage 16 est reliée à un dispositif d'analyse 21 au moyen d'un capillaire 22 branché à la sortie 20. La température de la chambre 16, du dispositif d'analyse 21 et du capillaire 22 est maintenue à une valeur adéquate au moyen d'un régulateur de température schématiquement représenté en 42.

La première entrée 17 est contrôlée au moyen d'une vanne 23, commandée par le programmateur 15, qui peut relier la chambre 16 à une pompe à vide schématiquement représentée en 24, à la source de gaz de purge 11 au moyen du tuyau 12, ou qui peut encore fermer l'entrée 17.

L'entrée 18 est définie par une portion de cylindre 25, munie d'un filetage 26. Elle est fermée par un opercule étanche formé d'un septum 27 fixé sur l'extrémité de la portion cylindrique 25 au moyen d'une bague 28 vissée sur le filetage 26.

La sortie 19 est destinée à permettre l'échappement du gaz de purge. Elle comporte une vanne 29, commandée par le programmateur 15.

Le dispositif d'analyse 21 est avantageusement formé d'un spectromètre de masse, par exemple le modèle vendu sous la marque "ThermoStar" par la maison Balzers Instruments AG. Il comporte une enceinte 21a et un circuit électronique d'analyse 21b. L'enceinte 21a est maintenue sous vide au moyen d'un système de pompage, schématiquement représenté en 30 et contigu à l'enceinte 21a. Le circuit d'analyse 21b mesure les courants ioniques pour différentes masses et adresse au programmateur 15 les informations recueillies.

De tels spectromètres permettent de caractériser des ions dont la masse molaire peut atteindre 300. Ce genre de spectromètre était jusqu'ici utilisé uniquement pour l'analyse de gaz et de l'air. Il est beaucoup moins sensible à l'oxygène que les spectromètres permettant de mesurer des ions ayant une masse molaire égale ou supérieure à 400, tels que ceux employés jusqu'ici et associés aux chromatographes.

L'opérateur du dispositif peut, au moyen du tableau de commande 3, définir les masses qui seront prises en considération lors de la qualification de l'analyte.

En variante, la pompe 24 peut être supprimée. La chambre 16 est alors reliée directement au système de pompage 30.

La tête 6 est montée rigidement sur le bras 5. Elle comporte un organe de préhension 32, un lecteur 33 et un dispositif 34 de transfert de l'analyte.

L'organe de préhension 32 est avantageusement réalisé au moyen d'un électro-aimant coopérant avec la bague 9a des récipients 9 ou d'une pince susceptible de saisir ceux-ci par serrage. Il est commandé par le programmateur 15. De tels organes sont parfaitement connus de l'homme du métier. Ils ne seront en conséquence pas décrits de manière plus détaillée.

Le lecteur 33 permet d'identifier les récipients 9, avant qu'ils ne soient saisis par l'organe de préhension 32. Cette identification peut avantageusement se faire au moyen d'un code à barres porté par chacun des récipients 9. Les informations recueillies sont adressées au programmateur 15 pour assurer l'identification des produits mesurés.

Le dispositif 34 de transfert de l'analyte comporte une seringue 35 munie d'un piston 36 et d'une aiguille 37. La seringue 35 comporte en outre une entrée 38 munie d'une vanne 39 commandée par le programmateur 15 et reliée au moyen du tuyau 12 à la source de gaz 11 qui sert à la purger. Elle peut en outre avantageusement être chauffée, par des moyens classiques, non représentés, afin d'éviter une condensation ou une adsorption de certaines des substances de l'analyte.

Le piston 36 est actionné au moyen d'un moteur schématiquement représenté en 41 commandé par le programmateur 15.

L'aiguille 37 est munie d'une ouverture latérale 37a, dans sa partie voisine de la pointe.

Le principe de fonctionnement du dispositif décrit ci-dessus est le suivant

Les produits à contrôler sont enfermés dans les récipients 9, par exemple au cours du processus de fabrication, par des moyens manuels ou automatiques. Les récipients 9 sont remplis de manière qu'un espace subsiste entre le produit et l'opercule. Ils sont amenés sur la table 8 par des moyens manuels ou automatiques (non représentés, car ne faisant pas directement partie de l'inventon). Chacun des récipients 9 porte avantageusement des moyens d'identification, tel qu'un code à barres.

Lorsque l'opérateur initialise une mesure, il définit la température du four 10 en fonction du produit à contrôler et des substances volatiles que doit comporter l'analyte, en général comprise entre 30 et 200 degrés centigrades. Il choisit aussi quelles masses seront quantifiées par le spectromètre pour définir une empreinte de l'analyte. Il précise en outre la température de la chambre 16, de l'enceinte 21a, du capillaire 22 et de la seringue 35. Ces températures sont préférentiellement choisies légèrement supérieures à celle du four 10, de manière à éviter l'adsorption des substances peu volatiles sur les parois de la chambre 16, du capillaire 22 et de l'enceinte 21 a. Toutes ces valeurs sont introduites dans le programmateur 15.

Quand la température est atteinte, le programmateur 15 donne l'ordre au bras 5 d'amener la tête 6 en regard .d'un récipient 9 dont le contenu doit être contrôlé. La tête 6 saisit le récipient 9 au moyen de l'organe de préhension 32 et le place dans le four 10.

Le récipient 9 y reste durant un temps suffisant pour assurer le passage en phase gazeuse de toutes les substances devant former l'analyte. Ce temps est en général compris entre une et dix minutes. Il peut parfois atteindre une heure. Simultanément, le récipient 9 peut être légèrement agité, pour faciliter l'évaporation des substances formant l'analyte et garantir l'homogénéité du produit et de l'analyte.

La durée du passage dans le four 10 et sa température varient en fonction du produit et de l'analyte. Les conditions de passage dans le four sont définies lors de tests préliminaires, définissant des conditions optimales, à même d'assurer un équilibrage entre l'analyte en phase gazeuse et l'échantillon de produit Ces conditions sont ensuite maintenues constantes dans le temps pour garantir la reproductibilité des essais.

Le programmateur 15 commande aussi le chauffage et la purge de l'appareil de mesure 2 et du système de transfert 34. La purge est effectuée au moyen du gaz de purge contenu dans la bonbonne 11. Le chauffage de l'appareil de mesure se fait au moyen du chauffage régulé 42.

Lorsque le programmateur 15 constate que la chambre 16, l'enceinte 21 a et le capillaire 22 sont propres, que la température de l'appareil 2 et du produit contenu dans le récipient 9 sont à la température adéquate, la tête 6 place le système de transfert 34 au-dessus du récipient 9 se trouvant dans le four 10. Le moteur 41 amène le piston 36 en position enfoncée dans la seringue 35.

Puis la tête 6 s'abaisse de sorte que l'aiguille 37 perfore le septum du récipient 9 et s'arrête dans l'espace libre. Le moteur 41 commande alors le déplacement du piston 36 vers le haut, de manière qu'une partie de l'analyte soit transférée du récipient 9 dans la seringue 35.

La tête 6 est ensuite remontée, entraînant avec elle l'aiguille 37 qui quitte le récipient 9. Elle est amenée au-dessus de rentrée 18 de l'appareil de mesure 2.

On relèvera que la pression dans l'espace libre du récipient 9 est sensiblement plus élevée que la pression atmosphérique, à cause de l'échauffement du produit dans le four 10, qui provoque la volatilisation de substances et la dilatation de l'air qui y est emprisonné. De la sorte, la pression à l'intérieur de la seringue 35 est suffisante pour éviter que de l'air extérieur y pénètre durant le déplacement

La tête 6 est une nouvelle fois abaissée. L'aiguille 37 perfore le septum 27. Le moteur 41 commande le piston 36 qui injecte l'analyte dans la chambre 16.

Durant cette opération, la vanne 23 est fermée alors que la vanne 29 est ouverte. De la sorte, la pression à l'intérieur de la chambre 16 reste voisine de la pression à l'extérieur, le gaz de purge encore contenu dans la chambre 16 étant expulsé par la vanne 29.

A la fin de l'injection, la vanne 29 est fermée.

En variante, lorsque la purge est terminée et avant que l'analyte ne soit introduit, la chambre 16 peut être vidée du gaz de purge au moyen de la pompe à vide 24. Durant cette opération, et durant l'introduction de l'analyte dans la chambre 16, la vanne 29 est alors fermée.

Plutôt que de purger la chambre 16, il est aussi possible de la nettoyer en éliminant son contenu, par pompage, au moyen de la pompe à vide 24.

Après introduction de l'analyte dans la chambre 16, une part est aspirée vers l'enceinte 21a sous l'effet de la différence de pression due au fait que l'enceinte 21 a est maintenue sous vide poussé par le système de pompage 30.

Les molécules de l'analyte destinées à la mesure sont fragmentées en ions qui sont analysés dans l'enceinte 21a au moyen du spectromètre de masse.

Lorsqu'une quantité suffisante de l'analyte a pénétré dans l'enceinte 21 a pour garantir la précision de la mesure, les informations recueillies définies par le circuit d'analyse 21b sont traitées par le programmateur 15.

De manière plus précise, le programmateur 15 enregistre le courant ionique pour différentes valeurs de masses, préalablement sélectionnées, et compare ce résultat avec les valeurs obtenues antérieurement pour ce type d'analyte.

Le temps de mesure peut être choisi pour chacune des masses, de façon que la quantité de courant mesurée soit suffisante pour qualifier de manière optimale le produit On constate en effet que certains ions, bien que présents en faibles quantités, sont particulièrement significatifs. Une augmentation du temps de mesure permet alors d'augmenter la précision.

En d'autres termes, on définit l'empreinte de l'analyte contrôlé et on compare celle-ci avec une empreinte de référence, obtenue par des mesures antérieures.

Si le résultat obtenu ne donne pas satisfaction, le programmateur 15 peut être agencé de manière à informer l'opérateur de l'écart enregistré, voire directement agir sur la chaîne de production en vue de modifier les conditions de travail.

Un nouveau cycle de mesures peut être ensuite initialisé, après que le récipient contenu dans le four 10 en a été retiré et replacé dans un endroit adéquat sur la table 8, par exemple à la place qu'il occupait antérieurement, en vue d'être soit recyclé, soit détruit.

Le programmateur 15 peut travailler selon deux modes principaux. Dans le premier mode, le fonctionnement du dispositif selon l'invention est contrôlé par asservissement; alors que dans le second mode il est contrôlé par programmation.

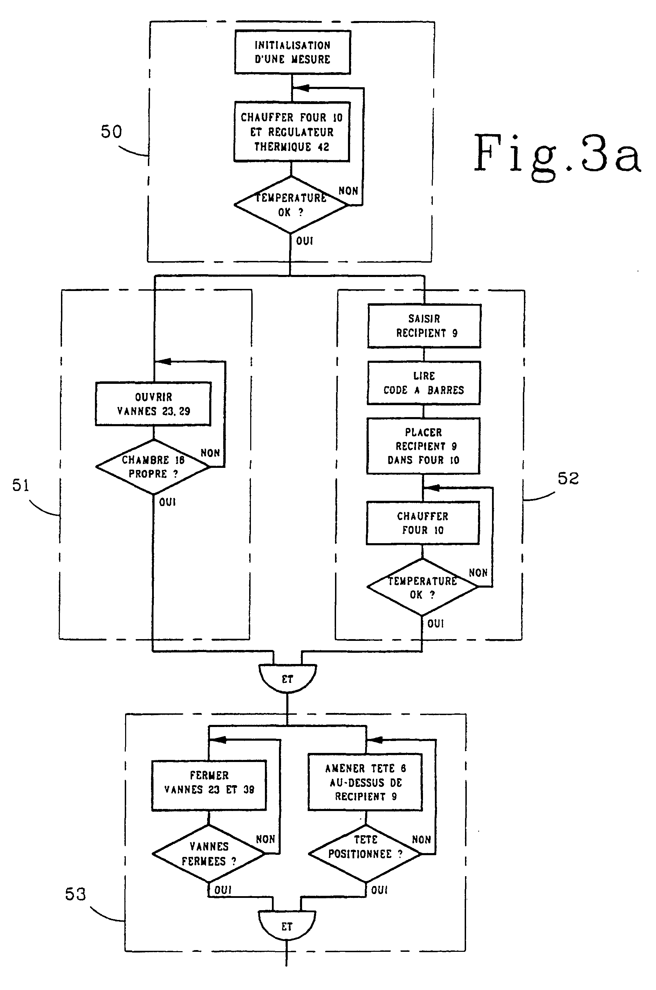

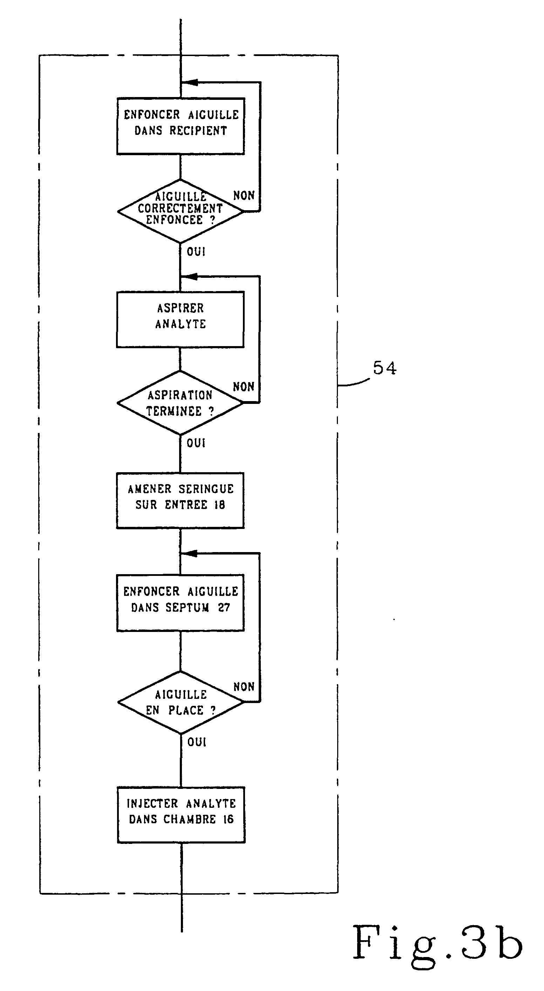

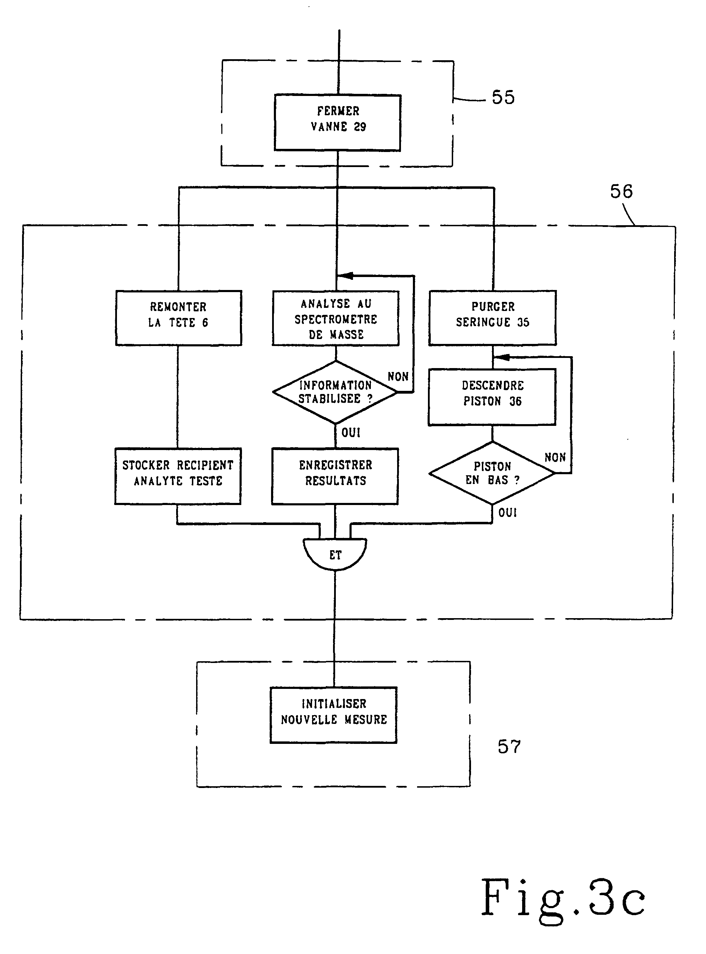

Le schéma fonctionnel de la figure 3, qui sera décrit ci-après, représente un exemple de fonctionnement par asservissement. La description de cette figure sera complétée en précisant en quoi diffère une commande par programmation. Les opérations de chacune des différentes étapes sont regroupées dans un rectangle en trait mixte.

Dès que la mesure a été initialisée, ce qui est représenté par le rectangle 50, le programmateur 15 commande le chauffage du four 10 et du régulateur thermique 42.

Lorsque les températures sont stabilisées, le programmateur 15 peut mettre en route un premier cycle de mesures et effectue, dans un premier temps, l'ensemble des opérations répertoriées dans le rectangle 51. Il commande tout d'abord l'ouverture de la vanne 23, pour assurer l'entrée du gaz de purge dans la chambre 16. Il ouvre en outre la vanne 29 de manière à permettre au gaz de purge de s'évacuer. La seringue 35 est pour sa part propre. Le piston 36 se trouve au fond de la seringue 35.

Tant que le signal reçu du circuit d'analyse 21b par le programmateur 15 montre la présence de substances autres que le gaz de purge, l'opération de purge se poursuit.

Dans le cas d'une commande selon le second mode, on introduit dans le programmateur 15 un temps de purge, défini à l'avance, fonction de l'analyte antérieurement analysé.

Parallèlement, le programmateur 15 adresse au dispositif d'entraînement du bras 5 et de la tête 6 des ordres, représentés dans le rectangle 52, qui font que l'organe de préhension se positionne au-dessus d'un récipient 9 contenant le produit à qualifier, puis le saisit et l'amène dans le four 10. Durant ce transfert, le lecteur de code à barres 33 détermine le contenu du récipient 9 et le transmet au programmateur 15.

Lorsque le programmateur 15 considère que le récipient a la température adéquate et que la chambre 16, le capillaire 22 et l'enceinte de mesure 21 a sont propres, il commande un ensemble d'actions, correspondant à un deuxième temps et regroupées dans le rectangle 53 de la figure 3.

Plus précisément, le programmateur 15 ferme les vannes 23 et 39 et donne l'ordre au bras 5 d'amener la tête 6 au-dessus du récipient 9, et plus particulièrement l'aiguille 37 au-dessus de son septum.

Le programmateur 15 vérifie ensuite que les vannes 23 et 39 sont fermées et que la tête 6 est en position adéquate. Cette vérification peut se faire au moyen de capteurs coopérant respectivement avec le piston 35, les vannes 23 et 29 et la tête 6.

Lorsque ces conditions sont remplies, le programmateur 15 adresse une série d'ordres correspondant à un troisième temps et représentés dans le rectangle 54. Le bras 5 est déplacé verticalement de manière qu'il abaisse la tête 6 suffisamment pour que l'aiguille 37 transperce le septum du récipient 9 et se positionne dans l'espace libre contenant l'analyte, sans plonger dans le produit

Après vérification de cette opération, le programmateur 15 enclenche le moteur 41 pour entraîner le piston 36 vers le haut. Une dose calibrée de l'analyte est ainsi transférée du récipient 9 vers la seringue 35.

Lorsque la quantité d'analyte est considérée comme suffisante par le programmateur 15, ce dernier arrête le moteur 41 et la tête 6 est soulevée, de manière que l'aiguille 37 soit dégagée du récipient 9.

Le programmateur 15 donne alors l'ordre de déplacer la tête 6 jusqu'au-dessus de l'entrée 18. L'aiguille 37 se trouve ainsi en regard du septum 27 obturant cette entrée 18. Le programmateur 15 génère ensuite la descente de la tête 6. L'aiguille 37 perfore le septum 27 et pénètre dans la chambre 16.

Le programmateur 15 ayant vérifié que l'aiguille 37 est en positon adéquate, il donne l'ordre au moteur 41 d'enfoncer le piston 36 dans la seringue 35, injectant ainsi l'analyte dans la chambre 16. Afin d'éviter une surpression dans cette dernière, la vanne 29 a été maintenue ouverte. De la sorte, l'analyte chasse le gaz de purge hors de la chambre 16.

Dans un quatrième temps, représenté par le rectangle 55, un capteur non représenté au dessin, placé dans la chambre 16, détermine le moment où la pression dans cette dernière est adéquate. Le programmateur 15 ferme alors la vanne 29. En variante, la pression dans la chambre 16 peut être définie comme égale à la pression atmosphérique. Dans ce cas, il suffit que la vanne 29 soit formée d'une valve permettant l'échappement d'un gaz de la chambre 16 vers l'extérieur, mais empêchant une pénétration. La chambre 16 ne peut ainsi être polluée par des substances provenant de l'environnement de l'appareil. De la sorte, la vanne 29 se ferme automatiquement.

Dans un cinquième temps, représenté par le rectangle 56, le programmateur 15 donne l'ordre au bras 5 de remonter la tête 6, qui retire en conséquence l'aiguille 37 de l'appareil de mesure 2. Le récipient 9, dont l'analyte est en cours d'analyse, est retiré du four 10 et mis en stock. Il peut simplement réintégrer la place qu'il occupait initialement sur la table 8.

La seringue 35 et l'aiguille 37 sont purgées. A cet effet, le piston 36 est relevé au-dessus de l'ouverture 38. Le programmateur 15 ouvre la vanne 39. De la sorte, le gaz de purge traverse la seringue 35 et sort par l'ouverture 37a de l'aiguille 37. La purge ainsi réalisée peut avantageusement être complétée par un mouvement de va et vient du piston 36, qui chasse le gaz de purge hors de la seringue 35.

Parallèlement, le programmateur 15 analyse les résultats fournis par le spectromètre de masse, au travers du circuit d'analyse 21b. Lorsque les informations délivrées sont stabilisées, le programmateur 15 les gère et les met en mémoire. Le cas échéant, il peut être programmé pour qu'une alarme soit enclenchée si les résultats ne concordent pas avec la norme définie. Il est également possible d'envisager un ajustement direct du processus de fabrication sur la base des résultats obtenus.

Lorsque ces opérations sont terminées, le programmateur 15 peut, dans un sixième temps représenté par le rectangle 57, initialiser un nouveau cycle de mesures, selon la même procédure que celle décrite ci-dessus.

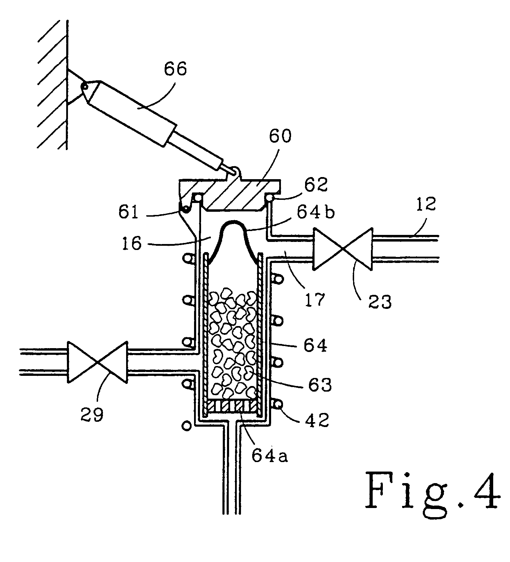

Dans une variante représentée à la figure 4, l'analyte n'est plus introduit dans la chambre 16 au moyen d'une seringue, mais fixé sur un adsorbant.

Avant cette introduction, l'adsorbant est placé, dans des conditions adéquates de température, pression et humidité, dans un milieu contenant - ou dans lequel circule - l'analyte.

Dans ce mode de réalisation, la chambre 16 est fermée par un couvercle 60 relié à la paroi de la chambre 16 par une charnière 61. Un joint 62 assure l'étanchéité entre le couvercle 60 et la paroi de la chambre 16.

L'analyte est transféré au moyen d'un substrat 63, du charbon actif par exemple, contenu dans une nacelle cylindrique 64, dont l'extrémité inférieure est fermée par une cloison perforée 64a. La nacelle 64 est en outre munie d'une boucle 64b permettant sa manipulation.

Le régulateur de température 42 assure le chauffage de la chambre 16.

Avant l'introduction de la nacelle 64, le programmateur 15 commande la fermeture des vannes 23 et 29 et l'ouverture du couvercle 60, par l'intermédiaire d'un bras motorisé 66, par exemple un piston pneumatique. Le dispositif de préhension 32 amène ensuite la nacelle 64 dans la chambre 16. Le programmateur 15 commande la fermeture du couvercle 60.

La température régnant dans la chambre 16 est choisie de manière à libérer l'analyte. Le programmateur 15 commande l'ouverture de la vanne 23. De la sorte, le gaz de purge, introduit par le haut dans la chambre 16, joue le rôle de piston et pousse l'analyte dans la partie inférieure de la chambre 16, favorisant ainsi son introduction dans le capillaire 22. La mesure s'effectue ensuite comme cela a été décrit ci-dessus.

Lorsque l'opération de mesure est terminée, la nacelle 64 est retirée avec l'adsorbant avant que l'installation ne soit purgée.

Ce mode de faire offre les mêmes avantages que la solution précédemment décrite, et se prête bien à l'analyse de substances présentes sous forme de traces et facilement désorbables.

Ainsi que cela a pu être constaté au travers de la description qui précède, le dispositif selon l'invention peut assurer un contrôle automatisé ou semi-automatisé de la qualité de produits contenant des substances volatiles, tels que ceux de l'industrie agro-alimentaire. Il fait appel à un équipement de mesure d'un faible coût, compte tenu des résultats délivrés. La précision obtenue garantit des tests sûrs et répétitifs.

L'expérience a ainsi montré que, bien que l'on renonce à utiliser un chromatographe en phase gazeuse associé ou non à un spectromètre de masse permettant la mesure d'ions ayant une masse molaire supérieure à 300, l'empreinte de l'analyte est tout à fait suffisante pour garantir le suivi d'une production. De plus, la fréquence de mesure d'un dispositif tel qu'il vient d'être décrit est particulièrement élevée. Un cycle complet de mesures peut ainsi être réalisé en un temps défini pratiquement par le temps nécessaire pour chauffer le produit à qualifier.

## Revendications

1. Dispositif pour qualifier des produits contenant des substances volatiles qui forment ensemble un analyte, comportant un appareil de mesure (2) doté d'une enceinte de mesure (21 a) et d'un circuit électronique d'analyse (21b) pour définir des caractéristiques dudit analyte, un système de pompage (30) pour faire le vide à l'intérieur de ladite enceinte (21 a), une chambre d'échantillonnage (16) dans laquelle ledit analyte est introduit et un capillaire (22) pour relier ladite chambre (16) à ladite enceinte (21a), ladite chambre (16) comportant :
• une première entrée (18) pour introduire ledit analyte et munie d'un opercule étanche (27; 60, 62),
• une deuxième entrée (17) reliée à une source de gaz de purge (11) et munie d'une vanne (23), et
• une sortie (19) permettant l'évacuation du gaz contenu dans ladite chambre (16) et munie également d'une vanne (29),
le dispositif comprenant en outre un système de transfert (35, 32, 63, 64) pour introduire l'analyte dans la chambre d'échantillonnage, et un programmateur (15) de commande du circuit d'analyse (21b), du système de transfert (35, 32, 63, 64) et desdites vannes (23, 29), permettant de réaliser de manière séquentielle la purge de la chambre, du capillaire et de l'enceinte, puis l'introduction de l'analyte dans l'enceinte et, enfin, son analyse, le dispositif étant **caractérisé par le fait que** le programmateur (15) est agencé de manière à ce que :
• dans un premier temps (51, 52), les vannes de la deuxième entrée (23) et de la sortie (29) sont ouvertes pour laisser passer le gaz de purge, tant qu'un nombre significatif de particules de l'analyte antérieurement analysé pourrait se trouver dans la chambre (16), l'enceinte (21 a) ou le capillaire (22),
• dans un deuxième temps (53), la vanne (23) d'entrée est fermée, empêchant la pénétration de gaz de purge,
• dans un troisième temps (54), le système de transfert (35, 32, 63, 64) est activé, pour introduire l'analyte à mesurer dans la chambre (16),
• dans un quatrième temps (55), la vanne de sortie (29) est fermée,
• dans un cinquième temps (56), au moins, l'appareil d'analyse (2) définit des caractéristiques de l'analyte qui passe de ladite chambre (16) dans ladite enceinte (21 a), et
• dans un sixième temps (57), l'opération recommence au premier temps, et cela tant qu'il y a d'autres produits à qualifier.

2. Dispositif selon la revendication précédente, **caractérisé en ce que** l'appareil de mesure (2) comporte un spectromètre de masse (21) relié à ladite chambre (16) au moyen dudit capillaire (22).

3. Dispositif selon la revendication 2, **caractérisé en ce que** le spectromètre (21) est choisi pour pouvoir **caractériser** des ions dont la masse molaire est inférieure ou égale à 300.

4. Dispositif selon l'une des revendications 1 à 3, **caractérisé en ce que** le système de transfert est réalisé au moyen d'une seringue (35) munie d'une aiguille (37) et **en ce que** l'opercule étanche est réalisé au moyen d'un septum (27).

5. Dispositif selon l'une des revendications 1 à 3, **caractérisé en ce que** le système de transfert comporte un matériau adsorbant (63) sur lequel ledit analyte est adsorbé.

6. Dispositif selon la revendication 5, **caractérisé en ce que** ledit opercule étanche est réalisé au moyen d'un couvercle amovible (60) muni d'un joint d'étanchéité (62) et d'un dispositif (66) pour ouvrir et fermer ledit couvercle (60), afin de permettre l'introduction et l'extraction dudit matériau adsorbant (63).

7. Dispositif selon la revendication 6, **caractérisé en ce que** ledit matériau adsorbant (63) est du charbon actif.

8. Dispositif selon l'une des revendications 1 à 7, **caractérisé en ce que** ledit dispositif d'analyse (21) est enclenché durant le temps où le gaz de purge pénètre dans ladite chambre (16) et **en ce que** le programmateur (15) est agencé de manière que la vanne d'entrée (23) soit fermée lorsque le circuit d'analyse (21b) informe ledit programmateur (15) de l'élimination de l'analyte antérieurement analysé dans le gaz pénétrant dans l'enceinte (21a).

9. Dispositif selon l'une des revendications 1 à 8, **caractérisé en ce que** la vanne de sortie (29) est réalisée au moyen d'une valve laissant sortir le gaz de la chambre (16) lorsque la pression y est supérieure à celle présente au-delà de ladite vanne (29).

10. Dispositif selon l'une des revendications 1 à 4, **caractérisé en ce qu'**il comporte en outre une pompe à vide (24) reliée à ladite chambre (16) et **en ce que** le programmateur (15) est agencé de manière que, après que la vanne d'entrée (23) a été fermée et avant que le système de transfert soit activé, ladite pompe (24) vide la chambre (16) du gaz de purge.

11. Dispositif selon l'une des revendications 1 à 3 , **caractérisé en ce que** le système de transfert comporte un matériau adsorbant (63) et **en ce que** le programmateur (15) est agencé de manière à ce que la vanne d'entrée (23) et la vanne de sortie (29) sont fermées préalablement à l'activation du système de transfert (35, 32, 63, 64) pour l'introduction de l'analyte à mesurer dans la chambre (16).

## Patentansprüche

1. Vorrichtung zur Charakterisierung von Produkten, welche flüchtige Substanzen enthalten, die zusammen einen Analyten bilden, bestehend aus einem Messapparat (2), welcher eine Messkammer (21a) und eine elektronische Analyseschaltung (21b) zur Bestimmung der Charakteristika des genannten Analyten aufweist, einem Pumpsystem (30) zur Erzeugung eines Vakuums im Innern der genannten Messkammer (21a), einer Probenahmekammer (16), in welche der genannte Analyt eingeführt wird, und einer Kapillare (22) zur Verbindung der genannten Probenahmekammer (16) mit der genannten Messkammer (21a); die genannte Probenahmekammer (16) umfasst:
- einen ersten Einlass (18) zur Einführung des genannten Analyten, der mit einem dichten Verschluss (27, 60, 62) versehen ist
- einen zweiten Einlass (17), der mit einer Spülgasquelle (11) verbunden ist und mit einem Absperrhahn (23) versehen ist, und
- einen Auslass (19), welcher die Evakuierung des in der genannten Probenahmekammer (16) enthaltenen Gases gestattet und der ebenfalls mit einem Absperrhahn (29) versehen ist;
die Vorrichtung umfasst ausserdem eine Transfervorrichtung (35, 32, 63, 64) zur Einführung des Analyten in die Probenahmekammer und ein programmierbares Steuergerät (15), welches die Analyseschaltung (21 b), die Transfervorrichtung (35, 32, 63, 64), und die genannten Absperrhähne (23, 29) steuert, was das Spülen der Probenahmekammer, der Kapillare und der Messkammer in sequentieller Weise, dann die Einführung des Analyten in die Messkammer und schliesslich dessen Analyse erlaubt; die Vorrichtung ist **dadurch gekennzeichnet, dass** das programmierbare Steuergerät (15) so eingerichtet ist, dass:
- in einer ersten Zeitspanne (51, 52) die Absperrhähne des zweiten Einlasses (23) und des Auslasses (29) geöffnet sind, um das Spülgas durchzulassen solange sich noch eine signifikante Anzahl an Partikeln des zuvor analysierten Analyten in der Probenahmekammer (16), der Messkammer (21 a) oder der Kapillare (22) befinden könnte,
- in einer zweiten Zeitspanne (53) der Einlassabsperrhahn (23) geschlossen ist, um das Eindringen des Spülgases zu verhindern,
- in einer dritten Zeitspanne (54) die Transfervorrichtung (35, 32, 63, 64) aktiviert ist, um den zu messenden Analyten in die Probenahmekammer (16) einzuführen,
- in einer vierten Zeitspanne (55) der Auslassabsperrhahn (29) geschlossen ist,
- in wenigstens einer fünften Zeitspanne (56) der Analyseapparat (2) Charakteristika des Analyten bestimmt, welcher von der Probenahmekammer (16) in die Messkammer (21 a) gelangt, und
- in einer sechsten Zeitspanne (57) das Verfahren erneut bei der ersten Zeitspanne beginnt, und dies solange weitere zu charakterisierende Produkte vorliegen.

2. Vorrichtung gemäss dem vorangehenden Anspruch, **dadurch gekennzeichnet, dass** der Messapparat (2) mit einem Massenspektrometer (21) versehen ist, das mit der genannten Probenahmekammer (16) mittels der genannten Kapillare (22) verbunden ist.

3. Vorrichtung gemäss Anspruch 2, **dadurch gekennzeichnet, dass** das Massenspektrometer (21) so gewählt ist, dass die Bestimmung von lonen mit einem Molekulargewicht kleiner oder gleich 300 möglich ist.

4. Vorrichtung gemäss einem der Ansprüche 1 bis 3, **dadurch gekennzeichnet, dass** die Transfervorrichtung mittels einer mit einer Nadel (37) versehenen Spritze (35) realisiert ist und dadurch, dass der dichte Verschluss mittels eines Septums (27) realisiert ist.

5. Vorrichtung gemäss einem der Ansprüche 1 bis 3, **dadurch gekennzeichnet, dass** die Transfervorrichtung einen adsorbierenden Werkstoff (63) enthält, auf dem der genannte Analyt adsorbiert wird.

6. Vorrichtung gemäss Anspruch 5, **gekennzeichnet dadurch, dass** der genannte dichte Verschluss mittels eines abnehmbaren Deckels (60) realisiert ist, der mit einem Dichtungsring (62) und mit einer Vorrichtung (66) zum Öffnen und Schliessen des genannten Deckels (60) versehen ist, um das Einführen und Herausnehmen des genannten adsorbierenden Werkstoffes (63) zu gestatten.

7. Vorrichtung gemäss Anspruch 6, **dadurch gekennzeichnet, dass** der adsorbierende Werkstoff (63) Aktivkohle ist.

8. Vorrichtung gemäss einem der Ansprüche 1 bis 7, **dadurch gekennzeichnet, dass** die genannte Analysevorrichtung (21) während der Zeit eingeschaltet ist, wo das Spülgas in die Probenahmekammer (16) eindringt und dadurch, dass das programmierbare Steuergerät (15) so eingerichtet ist, dass der Einlassabsperrhahn (23) geschlossen wird, wenn die Analyseschaltung (21b) das programmierbare Steuergerät (15) über die Beseitigung des vorgängig analysierten Analyten im in die Messkammer (21 a) eindringenden Gas informiert.

9. Vorrichtung gemäss einem der Ansprüche 1 bis 8, **dadurch gekennzeichnet, dass** der Auslassabsperrhahn (29) mittels eines Ventils realisiert ist, welches das Gas aus der Probenahmekammer (16) austreten lässt, wenn der darin herrschende Druck grösser ist als der Druck auf der anderen Seite des genannten Ventils (29).

10. Vorrichtung gemäss einem der Ansprüche 1 bis 4, **dadurch gekennzeichnet, dass** diese ausserdem eine Vakuumpumpe (24) enthält, die mit der genannten Probenahmekammer (16) verbunden ist, und dadurch, dass das programmierbare Steuergerät (15) so eingerichtet ist, dass, nachdem der Einlassabsperrhahn (23) geschlossen wurde und bevor die Transfervorrichtung aktiviert wird, die genannte Pumpe (24) die Probenahmekammer (16) vom Spülgas befreit.

11. Vorrichtung gemäss einem der Ansprüche 1 bis 3, **dadurch gekennzeichnet, dass** die Transfervorrichtung ein adsorbierendes Material (63) enthält, und dadurch, dass das programmierbare Steuergerät (15) so eingerichtet ist, dass der Einlassabsperrhahn (23) und der Auslassabsperrhahn (29) vor der Aktivierung der Transfervorrichtung (35, 32, 63, 64) geschlossen werden, um den zu messenden Analyten in die Probenahmekammer (16) einzuführen.

## Claims

1. Device for qualifying products containing volatile substances which together form an analyte, said device comprising a measuring apparatus (2) provided with a measurement cell (21a) and an electronic analytical circuit (21b) for determining the properties of the analyte, a pumping system (30) for creating a vacuum inside said cell (21a), a sampling chamber (16) into which the analyte is introduced, and a capillary (22) for connecting said chamber (16) to said cell (21a), said chamber (16) comprising:
• a first inlet (18) for introducing said analyte and fitted with a sealed lid (27; 60, 62),
• a second inlet (17) connected to a source of purge gas (11) and fitted with a valve (23), and
• an outlet (19) for removing the gas present in said chamber (16) and also fitted with a valve (29),
the device also comprising a transfer system (35, 32, 63, 64) for introducing the analyte into the sampling chamber and a programmer (15) for controlling the analytical circuit (21b), the transfer system (35, 32, 63, 64) and said valves (23, 29), making it possible to sequentially purge the chamber, the capillary and the cell, then to introduce the analyte into the cell and, finally, to analyze it, the device being **characterized by** the fact that the programmer (15) is arranged in a manner so that:
• in a first step (51, 52), the valves of the second inlet (23) and of the outlet (29) are opened to allow the purge gas to pass through as long as a significant number of particles of the previously analyzed analyte could be present in the chamber (16), the cell (21a) or the capillary (22),
• in a second step (53), the inlet valve (23) is closed, preventing the penetration of purge gas,
• in a third step (54), the transfer system (35, 32, 63, 64) is activated to introduce the analyte to be measured into the chamber (16),
• in a fourth step (55), the outlet valve (29) is closed,
• in a fifth step (56), at least, the analytical apparatus (2) determines the properties of the analyte which passes from said chamber (16) into said cell (21a), and
• in a sixth step (57), the operation is repeated from the beginning, as long as there are other products to be qualified.

2. Device according to the preceding claim, **characterized in that** the measuring apparatus (2) comprises a mass spectrometer (21) connected to said chamber (16) by means of said capillary (22).

3. Device according to Claim 2, **characterized in that** the spectrometer (21) is selected to be able to characterize ions of which the molecular weight is 300 or less.

4. Device according to one of Claims 1 to 3, **characterized in that** the transfer system is prepared by means of a syringe (35) fitted with a needle (37) and **in that** the sealed lid is prepared by means of a septum (27).

5. Device according to one of Claims 1 to 3, **characterized in that** the transfer system comprises an adsorbent material (63) on which said analyte is adsorbed.

6. Device according to Claim 5, **characterized in that** said sealed lid is prepared by means of a removable cover (60) fitted with a seal (62) and a device (66) to open and close said cover (60), to permit the introduction and extraction of said adsorbent material (63).

7. Device according to Claim 6, **characterized in that** said adsorbent material (63) is activated charcoal.

8. Device according to one of Claims 1 to 7, **characterized in that** said analytical device (21) is started during the time when the purge gas penetrates into said chamber (16) and **in that** the programmer (15) is arranged so that the inlet valve (23) is closed while the analytical circuit (21b) informs said programmer (15) of the removal of the previously analyzed analyte in the gas penetrating into the cell (21a).

9. Device according to one of Claims 1 to 8, **characterized in that** the outlet valve (29) is prepared by means of a valve allowing the gas to leave the chamber (16) when the pressure therein is higher than the pressure prevailing beyond said valve (29).

10. Device according to one of Claims 1 to 4, **characterized in that** it further comprises a vacuum pump (24) connected to said chamber (16) and **in that** the programmer (15) is arranged so that, after the inlet valve (23) has been closed and before the transfer system is activated, said pump (24) empties the chamber (16) of the purge gas.

11. Device according to one of Claims 1 to 3, **characterized in that** the transfer system comprises an adsorbent material (63) and **in that** the programmer (15) is arranged so that the inlet valve (23) and the outlet valve (29) are closed prior to the activation of the transfer system (35, 32, 63, 64) for the introduction of the analyte to be measured into the chamber (16).
